# DEMANDE DE BREVET EUROPEEN

(11) **EP 1 633 096 A1**
(43) Date de publication de la demande: **08.03.2006**
(21) Numéro de dépôt: 05107819.4
(22) Date de dépôt: 25.08.2005
(51) Int. Cl.: H04L 27/00

(54) **Détermination de fréquences de porteuses et de symboles dans un signal**

(30) Priorité: 26.08.2004 FR 0451910
(71) Demandeur: ST MICROELECTRONICS S.A., 92120 Montrouge (FR)
(72) Inventeur: Meyer, Jacques, 38950 Saint Martin le Vinoux (FR)
(74) Mandataire: de Beaumont, Michel

(57) **Abrégé**

L'invention concerne un procédé et un dispositif pour déterminer, dans un signal, une valeur de la fréquence d'une porteuse et une valeur de la fréquence de symboles véhiculés par la porteuse. Une bande du signal est analysée en trois points et les relations entre les énergies en ces points permettent de déterminer des valeurs de la fréquence de la porteuse et de la fréquence des symboles.

## Description

### Domaine de l'invention

La présente invention concerne de façon générale les systèmes de modulation où des informations sont véhiculées sous forme de symboles par des porteuses.

### Exposé de l'art antérieur

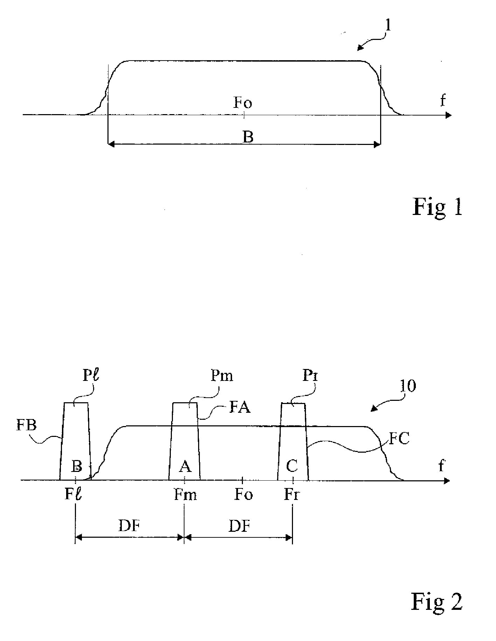

La figure 1 représente une bande 1 du spectre d'un signal modulé de façon classique par une modulation de type QAM, BPSK, QPSK, MPSK, etc.... La bande 1 est centrée sur une fréquence Fo correspondant à la fréquence de la porteuse. La largeur totale de la bande, B, s'étendant de part et d'autre de la fréquence centrale Fo, correspond sensiblement à la fréquence des symboles.

Un signal reçu, par exemple par un récepteur satellite, présente de nombreuses bandes ou canaux du type de la bande 1. Chaque bande est associée à une porteuse particulière, deux si les porteuses sont en quadrature, et chaque porteuse ou couple de porteuses est associé à une fréquence de symboles particulière.

Pour le traitement de ce type de signal, il est nécessaire de disposer précisément des valeurs des fréquences de la (ou des) porteuse(s) et de la fréquence des symboles.

Un problème se pose car les fréquences de la porteuse et la fréquence des symboles ne sont pas toujours connues du récepteur.

La détermination de ces fréquences est difficile car il s'agit d'une recherche sur deux paramètres, qui peuvent varier dans de grandes proportions. Par exemple, dans le signal provenant d'une antenne de récepteur satellite, les porteuses (ou canaux) sont réparties sur une gamme pouvant aller d'environ 1 à 2 GHz, et, pour chaque canal, la fréquence des symboles peut être par exemple comprise entre 1 et une trentaine ou une quarantaine de Mégabauds.

Un procédé classique pour déterminer les fréquences des porteuses et celles des symboles consiste à fixer arbitrairement une fréquence de symboles, par exemple 20 Mbauds, puis à balayer tout le spectre à la recherche des fréquences des porteuses. Ensuite, on modifie légèrement la fréquence des symboles, par exemple on la passe à 20,1 Mbauds, et on recommence le balayage du spectre. Ce procédé est très long, même si, par un balayage préalable, on a déterminé grossièrement la forme générale du spectre du signal.

Un objet de la présente invention est de permettre une détermination rapide de la fréquence de la ou des porteuses et de la fréquence des symboles pour chaque canal d'un signal.

### Résumé de l'invention

Pour atteindre cet objet, ainsi que d'autres, la présente invention prévoit un procédé pour déterminer, dans un signal, une valeur de la fréquence d'une porteuse et une valeur de la fréquence de symboles véhiculés par ladite porteuse, comprenant les étapes suivantes :
a) déterminer une caractéristique du signal en ou autour d'une pluralité de points d'une bande du spectre du signal, chaque point correspondant à une fréquence particulière du signal ;
b) déplacer lesdits points de sorte que les caractéristiques auxdits points présentent des relations particulières ; et
c) déterminer la valeur de la porteuse et la valeur de la fréquence des symboles à partir des fréquences correspondant auxdits points.

Selon un mode de réalisation de la présente invention, le procédé pour déterminer, dans un signal, une valeur de la fréquence d'une porteuse et une valeur de la fréquence de symboles véhiculés par ladite porteuse comprend les étapes suivantes :
a) déterminer une caractéristique du signal en ou autour d'un premier, un deuxième et un troisième point d'une bande du spectre du signal, le premier point correspondant à une première fréquence, le deuxième point correspondant à une deuxième fréquence inférieure à la première fréquence et le troisième point correspondant à une troisième fréquence supérieure à la première fréquence ;
b) déplacer les premier, deuxième et troisième points de sorte que ladite caractéristique du signal au deuxième point soit égale à ladite caractéristique du signal au troisième point et que le quotient de la somme desdites caractéristiques du signal au deuxième et troisième point et de ladite caractéristique du signal au premier point soit égale à un rapport déterminé ; et
c) choisir comme valeur de la porteuse la première fréquence et comme valeur de la fréquence des symboles la différence entre la troisième et la deuxième fréquence.

Selon un mode de réalisation de la présente invention, ladite caractéristique est l'énergie du signal.

Selon un mode de réalisation de la présente invention, la différence entre la première fréquence et la deuxième fréquence est égale à la différence entre la troisième fréquence et la première fréquence.

Selon un mode de réalisation de la présente invention, le procédé comprend les étapes suivantes :
5a) déterminer les énergies Pm, Pl, Pr du signal dans des zones autour des première, deuxième et troisième fréquences ;
5b) si Pr est supérieur à Pl, augmenter la première fréquence d'une quantité prédéterminée ; et/ou
5c) si le rapport (Pr+Pl)/Pm est supérieur à un rapport déterminé, augmenter l'écart entre la troisième et la deuxième fréquence.

Selon un mode de réalisation de la présente invention, la différence entre la troisième et la première fréquence est choisie initialement égale à la moitié de la plus petite fréquence possible pour les symboles.

Selon un mode de réalisation de la présente invention, la détermination de la caractéristique du signal est réalisée par une moyenne portant sur plusieurs échantillons.

La présente invention prévoit aussi un dispositif destiné à déterminer, dans un signal, une valeur de la fréquence d'une porteuse et une valeur de la fréquence de symboles véhiculés par ladite porteuse, comprenant :
a) un premier moyen changeur de fréquence pour transposer une première fréquence du signal à zéro ;
b) un deuxième moyen changeur de fréquence pour transposer une deuxième fréquence du signal à zéro ;
c) un troisième moyen changeur de fréquence pour transposer une troisième fréquence du signal à zéro ;
d) des moyens de filtrage propres à recevoir les signaux issus des premier, deuxième et troisième moyens changeurs de fréquence pour fournir une partie du spectre du signal centrée autour des première, deuxième et troisième fréquences ;
e) des moyens de calcul pour calculer l'énergie des signaux issus des moyens de filtrage ; et
f) des moyens de commande propres à commander les moyens changeurs de fréquence à partir des énergies fournies par les moyens de calcul.

Selon un mode de réalisation de la présente invention, les moyens de commande comprennent :
a) des moyens de détermination pour déterminer les relations Kc.(Pl-Pr) et Kt.(Pl + Pr - **α***Pm),
   Pm, Pl, Pr étant les énergies correspondant respectivement aux première, deuxième et troisième fréquences, Kc et Kt étant des paramètres et **α*** un coefficient déterminé ; et
b) des moyens d'incrémentation-décrémentation pour modifier les fréquences transposées par les moyens changeurs de fréquence en fonction du résultat fourni par les moyens de détermination.

Selon un mode de réalisation de la présente invention, le premier moyen changeur de fréquence est un dérotateur et les deuxième et troisième moyens changeurs de fréquence sont des dérotateurs couplés au premier dérotateur.

Selon un mode de réalisation de la présente invention, le dispositif comprend en outre un filtre à débit variable couplé entre la sortie du premier dérotateur et l'entrée des deuxième et troisième dérotateurs.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles:
la figure 1 illustre la bande de fréquences utilisée par un canal d'un signal reçu ;
les figures 2, 3 et 4 illustrent le procédé selon la présente invention ; et
les figures 5 et 6 représentent des modes de réalisation de dispositifs selon la présente invention.

### Description détaillée

Par souci de clarté, de mêmes éléments ont été, sauf mention contraire, désignés par de mêmes références aux différentes figures et, de plus, les diverses figures ne sont pas tracées à l'échelle.

En figure 2, selon la présente invention, une bande 10, de fréquence centrale Fo, correspondant à un canal, est analysée en trois points A, B et C. Les points A, B et C correspondent respectivement à des fréquences Fm, Fl et Fr. La fréquence Fl est inférieure à la fréquence Fm et la fréquence Fr est supérieure à la fréquence Fm. La différence DF entre les fréquences Fm et Fl est égale à la différence entre les fréquences Fr et Fm.

L'énergie du signal est déterminée aux points A, B et C. Pour ce faire, des filtres à bande étroite FA, FB, FC prélèvent une partie du signal autour des fréquences Fm, Fl et Fr, et des modules de calcul déterminent l'énergie du signal en sortie de ces filtres. Notons Pm l'énergie correspondant à la fréquence Fm, Pr l'énergie correspondant à la fréquence Fr et Pl l'énergie correspondant à la fréquence Fl.

Selon la présente invention, on compare les énergies Pr et Pl d'une part, et on examine le rapport **α** = (Pl+Pr)/Pm d'autre part. Si Pr est différent de Pl, et **α** différent d'une valeur déterminée **α***, on décale les points A, B et C jusqu'à ce que Pr = Pl et **α** = **α***.

En figure 2, Pr est sensiblement égal à Pm et Pl est sensiblement nul. L'ensemble des points A, B, C va être décalé vers la droite, dans le sens des fréquences croissantes. De nouvelles déterminations de Pm, Pr et Pl vont alors être effectuées, et les points A, B, C déplacés de nouveau, ensemble ou séparément, jusqu'à ce que l'on ait Pr = Pl et **α** = **α***.

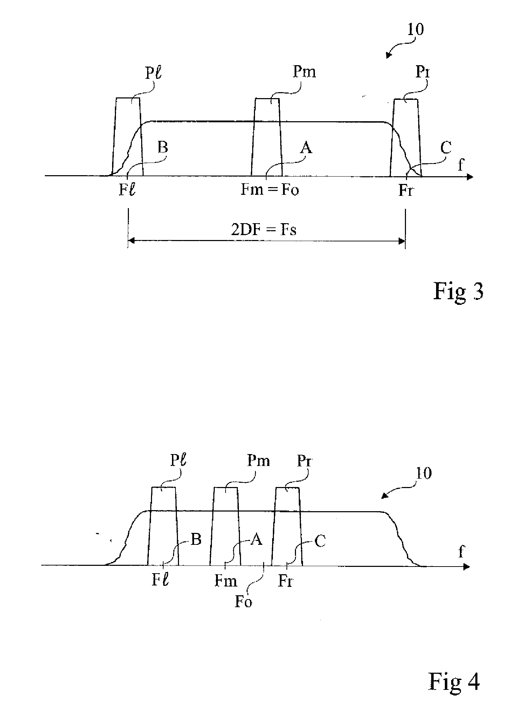

La figure 3 illustre l'état que nous nommerons d'équilibre dans lequel Pr = Pl et **α** = **α*. α*** est choisi de sorte que le point C corresponde à la fin de la bande 10 et que le point B corresponde au début de la bande 10. En outre, le rapport **α*** est choisi de sorte que, à l'équilibre, la différence des fréquences Fr et Fl, égale à 2DF, soit sensiblement égale à la fréquence de symboles Fs. Par ailleurs, comme Pl = Pr, le point A se situe sensiblement au milieu de la bande. La fréquence Fm est ainsi sensiblement égale à la fréquence centrale de la bande Fo, qui correspond à la fréquence de la porteuse.

Selon la présente invention, une fois l'équilibre obtenu, on choisit comme fréquence Fo de la porteuse la fréquence Fm et, comme fréquence Fs des symboles, la différence des fréquences Fr et Fl.

Les valeurs de Fo et Fs, ainsi obtenues très rapidement, sont en général des valeurs approchées. Cependant, elles sont suffisamment précises pour permettre d'appliquer de façon efficace des algorithmes fournissant des valeurs très précises de Fo et Fs. On notera que ces algorithmes, s'ils étaient utilisés directement, et non à partir des valeurs fournies par la présente invention, mettraient énormément de temps à converger ou probablement ne convergeraient pas du tout ou fourniraient des valeurs erronées.

Bien entendu, la configuration de la figure 2 n'est qu'un exemple seulement et, au cours ou au début du procédé, la configuration des points A, B et C peut être tout autre.

En figure 4, par exemple, les points A, B, C sont très rapprochés et les énergies Pl, Pm et Pr sont égales. Dans ce cas, on a bien Pl = Pr, mais **α**, sensiblement égal à 2, est très supérieur à α*. Dans ce cas, de préférence, on ne déplacera pas le point A, mais on déplacera les points B et C de sorte que l'intervalle DF soit plus grand. Ensuite, au fur et à mesure des itérations, on se trouvera d'abord dans un cas proche de celui de la figure 2 avant d'obtenir l'état d'équilibre de la figure 3.

On peut préférer se trouver, au début de la mise en oeuvre du procédé, dans un cas où les points A, B et C sont très rapprochés, comme en figure 4. Par exemple on peut choisir au départ les points A, B et C de sorte que l'écart de fréquence 2.DF corresponde à la fréquence de symboles la plus petite possible du système, 1 Mbaud par exemple. Le fait de choisir des points de départ rapprochés permet en général d'augmenter la rapidité du procédé et de sécuriser sa convergence.

Bien entendu, le procédé n'est pas limité à l'exemple illustré en relation avec les figures 2 à 4.

Par exemple, on peut déterminer aux points A, B et C une caractéristique du signal autre que l'énergie du signal, comme par exemple son amplitude.

La différence entre les fréquences Fm et Fl peut ne pas être égale à la différence des fréquences Fr et Fm. Elle peut par exemple être adaptée à la forme de la bande du canal considéré.

Aussi, dans le procédé de la présente invention, l'analyse du signal peut être faite en un nombre de points différents de trois.

Par exemple, on peut utiliser quatre points, en dédoublant le point A en deux points A1 et A2, symétriques du point A. On pourrait alors prendre pour énergie Pm la moyenne des énergies en A1 et A2. On peut aussi dédoubler les points B ou C, prenant ainsi en compte des formes particulières de début ou de fin de la bande.

Aussi, la valeur de **α*** n'est pas nécessairement fixe et peut par exemple être adaptée à la forme de la bande du signal.

On notera également que le calcul de l'énergie peut être effectué par une moyenne sur un certain nombre d'échantillons, par exemple quelques centaines ou milliers d'échantillons.

On va maintenant décrire deux modes de réalisation de dispositifs selon la présente invention.

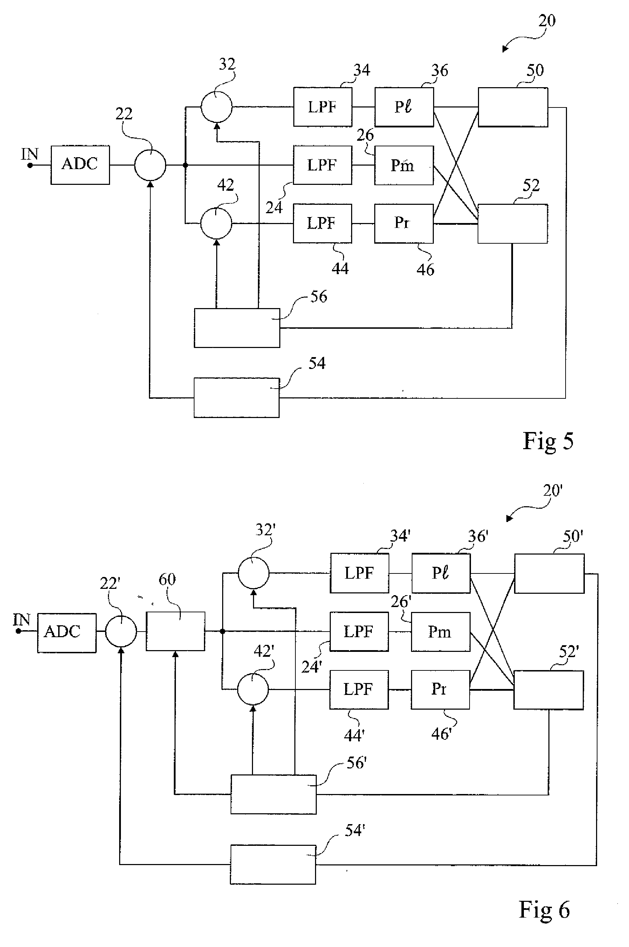

En figure 5, un signal reçu, par exemple issu d'un démodulateur d'un récepteur satellite, est fourni à l'entrée IN d'un dispositif 20 mettant en oeuvre le procédé selon la présente invention. Le signal fourni à l'entrée IN se compose généralement de deux composantes I et Q correspondant à la démodulation de porteuses en quadrature de phase.

Le signal numérisé issu du convertisseur analogique-numérique ADC attaque l'entrée d'un dérotateur 22. Le dérotateur 22 effectue un changement de fréquence de sorte que la fréquence Fm corresponde à zéro dans le signal en sortie du dérotateur.

La sortie du dérotateur 22 attaque un filtre passe bas 24. Le filtre passe-bas 24 laisse passer une portion du signal autour de la fréquence Fm. La sortie du filtre 24 attaque un module de calcul 26 qui détermine l'énergie Pm du signal issu du filtre 24. Les éléments 22, 24 et 26 opèrent sur les composantes I et Q du signal.

La sortie du dérotateur 22 attaque aussi un dérotateur 32. Le dérotateur 32 décale en fréquence le signal fourni par le dérotateur 22 de sorte que, en sortie du dérotateur 32, la fréquence Fl corresponde à zéro. La sortie du dérotateur 32 attaque un filtre passe bas 34, qui laisse passer une portion du signal autour de la fréquence Fl. La sortie du filtre 34 attaque un module de calcul 36 qui détermine l'énergie Pl du signal issu du filtre 34.

La sortie du dérotateur 22 attaque en outre un dérotateur 42. Le dérotateur 42 décale en fréquence le signal fourni par le dérotateur 22 de sorte que, en sortie du dérotateur 42, la fréquence Fr corresponde à zéro. La sortie du dérotateur 42 attaque un filtre passe bas 44, qui laisse passer une portion du signal autour de la fréquence Fr. La sortie du filtre 44 attaque un module de calcul 46 qui détermine l'énergie Pr du signal issu du filtre 44.

Un module 50 reçoit les énergies Pl et Pr calculées par les modules 36 et 46. Le module 50 fournit un signal égal à Kc.(Pl-Pr). Kc est un coefficient d'incrémentation qui influe sur la constante de l'asservissement réalisé pour déterminer la fréquence de la porteuse.

Un module 52 reçoit les énergies Pm, Pl et Pr fournies par les modules 26, 36 et 46. Le module 52 fournit un signal égal à Kt. (Pl + Pr - **α***Pm) . Kt est un coefficient d'incrémentation qui influe sur la constante de l'asservissement réalisé pour déterminer la fréquence des symboles. Les valeurs des coefficients Kc et Kt ne sont pas critiques. Les coefficients Kc et Kt sont par exemple choisis de façon à réaliser les asservissements de manière optimale.

Le module 50 attaque un module 54 qui règle la vitesse de variation de l'angle du dérotateur 22 de façon à décaler la fréquence Fm d'une quantité déterminée par le signal Kc.(Pl-Pr). Par exemple, la pulsation **ω** du dérotateur 22 est incrémentée, respectivement décrémentée, de la quantité Kc.(Pl-Pr).

Le module 52 attaque un module 56 qui règle, à la façon du module 54, les angles des dérotateurs 32 et 42 de façon à décaler la fréquence Fm de façon symétrique vers la gauche et vers la droite d'une quantité déterminée par le signal Kt . (Pl + Pr - **α***Pm) .

On notera que les gabarits des filtres passe-bas 24, 34 et 44 peuvent en outre être adaptés à la nouvelle différence de fréquence DF utilisée.

A l'équilibre, on a Pl-Pr = 0 et Pl + Pr - **α***Pm = 0 et le système n'évolue plus. On prend alors la valeur de Fm comme fréquence de la porteuse et la valeur de 2.DL = (Fr - Fl) comme fréquence des symboles. La fréquence de la porteuse et la fréquence des symboles peuvent par exemple être fournies respectivement par les modules 54 et 56.

En pratique, on peut avoir à l'équilibre une faible oscillation autour d'une valeur finale de Fm et de DF = Fl ― Fr. Cela n'est pas gênant. En effet, les boucles d'asservissement se stabilisent après un intervalle de temps déterminé, par exemple 15 millisecondes. Il suffit alors d'arrêter le système lorsque cet intervalle de temps s'est écoulé et de lire les valeurs de Fm, Fl et Fr. On peut aussi considérer que l'état d'équilibre est atteint lorsque les différences Pl-Pr et Pl + Pr - **α***Pm sont inférieures à des seuils proches de zéro.

Comme cela a déjà été dit, les valeurs obtenues pour la fréquence de la porteuse et la fréquence des symboles sont obtenues très rapidement. Ce sont en général des valeurs approchées. Dans un exemple pratique, la fréquence de la porteuse est déterminée à 1 % près et une valeur précise peut alors être obtenue par asservissement direct, par exemple à l'aide d'une boucle à verrouillage de phase. La précision sur la fréquence des symboles peut être moindre, par exemple aller jusqu'à 5 % dans des conditions défavorables. Cette précision est cependant suffisante pour permettre une détermination précise rapide par balayage de la bande ou l'utilisation d'algorithmes précis. Dans tous les cas, le gain de temps procuré par la présente invention est très important par rapport à l'art antérieur.

On va maintenant décrire, en relation avec la figure 6, un mode de réalisation d'un dispositif 20' selon la présente invention.

En figure 6, les éléments de même fonction que les éléments de la figure 5 portent le même numéro de référence, surmonté d'un « ' ». Ces éléments ne seront pas explicités à nouveau.

La différence entre les structures des dispositifs 20 et 20' est que le dispositif 20' comporte un élément supplémentaire, le module 60. Le module 60 est un filtre à débit variable ("variable rate filter" en terminologie anglo-saxonne). Le module 60 change la fréquence des échantillons issus du dérotateur 22' de sorte que la fréquence des échantillons en sortie du module 60 est égale à quatre fois la différence de fréquence DF, soit deux fois la fréquence testée pour les symboles.

Le choix de la fréquence 4.DF pour les échantillons en sortie du module 60 est avantageux. En effet, les dérotateurs 32' et 42', qui multiplient le signal par un facteur exp (j**ω**t), doivent alors multiplier le signal soit par +1, -1, j ou -j, ce qui est réalisé de façon très simple.

En outre, dans ce cas, les filtres passe-bas 24', 34' et 44' ont leur gabarit ajusté de façon automatique proportionnellement à la fréquence testée pour des symboles, ce qui peut éviter un ajustement séparé.

On notera en outre que le fait de faire une partie du traitement à la fréquence 4.DF permet une simplification des circuits. En effet, les éléments en aval du filtre 60 peuvent être pilotés à une fréquence plus faible, typiquement égale à la fréquence des échantillons en sortie du filtre 60. Dans le circuit de la figure 5, tous les éléments du dispositif sont pilotés à la fréquence d'échantillonnage élevée du convertisseur analogique-numérique. En effet, la fréquence d'échantillonnage du convertisseur analogique-numérique est généralement comprise entre 60 et 100 MHz, car elle doit être supérieure ou égale à deux fois la fréquence possible des symboles, pouvant atteindre 45 Mbauds.

Bien entendu, la présente invention est susceptible de diverses variantes et modifications qui apparaîtront à l'homme de l'art.

Ainsi, dans le dispositif 20, respectivement 20', les filtres passe-bas ne sont pas nécessairement identiques. Il en est de même des modules 26, 36 et 46.

Aussi, les modules 50 (50') et 52 (52') peuvent être de constitution différente que ce qui est décrit. Il peut par exemple s'agir de simples comparateurs comparant les énergies Pl et Pr d'une part, et les rapports (Pl+Pr)/Pm et **α*** d'autre part, les circuits 54 et 56 (54', 56') étant modifiés en conséquence.

On notera aussi bien entendu que les dispositifs 20 et 20' ne sont que des exemples seulement et que tout dispositif permettant de mettre en oeuvre le procédé selon la présente invention fait partie du domaine de la présente invention.

Ainsi, au lieu d'utiliser des filtres passe-bas après un changement de fréquence, on peut utiliser des filtres passe-bande centrés sur les fréquences Fm, Fr et Fl, la fréquence centrale de ces filtres pouvant être décalée.

## Revendications

1. Procédé pour déterminer, dans un signal, une valeur de la fréquence d'une porteuse et une valeur de la fréquence de symboles véhiculés par ladite porteuse, comprenant les étapes suivantes :
a) déterminer une caractéristique du signal en ou autour d'un premier (A), un deuxième (B) et un troisième (C) point d'une bande du spectre du signal, le premier point correspondant à une première fréquence (Fm), le deuxième point correspondant à une deuxième fréquence (Fl) inférieure à la première fréquence et le troisième point correspondant à une troisième fréquence (Fr) supérieure à la première fréquence ;
b) déplacer les premier, deuxième et troisième points de sorte que ladite caractéristique du signal au deuxième point soit égale à ladite caractéristique du signal au troisième point et que le quotient (Pl+Pr)/Pm de la somme desdites caractéristiques du signal au deuxième et troisième point et de ladite caractéristique du signal au premier point soit égale à un rapport déterminé (**α***); et
c) choisir comme valeur de la porteuse (Fo) la première fréquence (Fm) et comme valeur de la fréquence des symboles la différence entre la troisième et la deuxième fréquence.

2. Procédé selon la revendication 1, dans lequel ladite caractéristique est l'énergie du signal.

3. Procédé selon l'une des revendications 1 à 2, dans lequel la différence entre la première fréquence et la deuxième fréquence est égale à la différence entre la troisième fréquence et la première fréquence.

4. Procédé selon la revendication 3, dans lequel le procédé comprend les étapes suivantes :
4a) déterminer les énergies Pm, Pl, Pr du signal dans des zones autour des première, deuxième et troisième fréquences ;
4b) si Pr est supérieur à Pl, augmenter la première fréquence d'une quantité prédéterminée ; et/ou
4c) si le rapport (Pr+Pl)/Pm est supérieur à un rapport déterminé (**α***), augmenter l'écart (2.DF) entre la troisième et la deuxième fréquence.

5. Procédé selon l'une des revendications 1 à 4, dans lequel la différence entre la troisième et la première fréquence est choisie initialement égale à la moitié de la plus petite fréquence possible pour les symboles.

6. Procédé selon l'une des revendications 1 à 5, dans lequel la détermination de la caractéristique du signal est réalisée par une moyenne portant sur plusieurs échantillons.

7. Dispositif destiné à déterminer, dans un signal, une valeur de la fréquence d'une porteuse et une valeur de la fréquence de symboles véhiculés par ladite porteuse, comprenant :
a) un premier moyen changeur de fréquence (22, 22') pour transposer une première fréquence (Fm) du signal à zéro ;
b) un deuxième moyen changeur de fréquence (32, 32') pour transposer une deuxième fréquence (Fl) du signal à zéro ;
c) un troisième moyen changeur de fréquence (42, 42') pour transposer une troisième fréquence (Fr) du signal à zéro ;
d) des moyens de filtrage (24, 34, 44, 24', 34', 44') propres à recevoir les signaux issus des premier, deuxième et troisième moyens changeurs de fréquence pour fournir une partie du spectre du signal centrée autour des première, deuxième et troisième fréquences ;
e) des moyens de calcul (26, 36, 46, 26', 36', 46') pour calculer l'énergie des signaux issus des moyens de filtrage ; et
f) des moyens de commande (50, 52, 54, 56, 50', 52', 54', 56') propres à commander les moyens changeurs de fréquence à partir des énergies fournies par les moyens de calcul, dans lequel les moyens de commande comprennent :
g) des moyens de détermination (50, 52, 50', 52') pour déterminer les relations Kc.(Pl-Pr) et Kt.(Pl + Pr - **α***Pm),
Pm, Pl, Pr étant les énergies correspondant respectivement aux première, deuxième et troisième fréquences, Kc et Kt étant des paramètres et **α*** un coefficient déterminé ; et
h) des moyens d'incrémentation-décrémentation (54, 56, 54', 56') pour modifier les fréquences transposées par les moyens changeurs de fréquence en fonction du résultat fourni par les moyens de détermination.

8. Dispositif selon la revendication 7, dans lequel le premier moyen changeur de fréquence est un dérotateur et dans lequel les deuxième et troisième moyens changeurs de fréquence sont des dérotateurs couplés au premier dérotateur.

9. Dispositif selon la revendication 8, comprenant en outre un filtre à débit variable (60) couplé entre la sortie du premier dérotateur et l'entrée des deuxième et troisième dérotateurs.
